# EUROPEAN PATENT SPECIFICATION

(11) **EP 2 797 470 B1**
(45) Date of publication and mention of the grant of the patent: **18.05.2016**
(21) Application number: 12816518.0
(22) Date of filing: 10.12.2012
(51) Int. Cl.: A47J 31/06, A47J 31/18, A47J 31/053

(54) **APPARATUS FOR BREWING INGREDIENTS IN A SOLVENT**
VORRICHTUNG ZUM BRÜHEN VON INHALTSSTOFFEN IN EINEM LÖSUNGSMITTEL
APPAREIL POUR PRÉPARATION D'INGRÉDIENTS DANS UN SOLVANT

(30) Priority: 26.12.2011 WO PCT/CN2011/084704
(43) Date of publication of application: 05.11.2014
(73) Proprietor: Koninklijke Philips N.V., 5656 AE Eindhoven (NL)
(72) Inventor: HA, Wan, Kei, Ricky, NL-5656 AE Eindhoven (NL); WANG, Guangwei, NL-5656 AE Eindhoven (NL)
(74) Representative: Coops, Peter
(86) International application number: PCT/IB2012/057120
(87) International publication number: WO 2013/098681

(56) References cited:
- WO-A1-2010/041003
- WO-A1-2012/160482
- US-A- 5 868 062

## Description

### FIELD OF THE INVENTION

The invention relates to an apparatus for brewing ingredients in a solvent.

The invention may be used, for example, in the field of beverage preparation.

### BACKGROUND OF THE INVENTION

Preparing beverages by brewing (raw) ingredients in a solvent is very popular. For example, tea is prepared by brewing (i.e. infusing) tea leaves (or tea bags) used as ingredients, in hot/boiling water used as the solvent. The same process may be used when beverages are prepared from different ingredients, such as various herbs, plant leaves or plant roots.

After a given period of time, ingredients are taken out of the solvent, and the resulting solvent corresponds to the prepared beverage. Such beverages are usually prepared using dedicated domestic appliances, such as a tea maker.

To simplify the use by end-users of such appliances regarding the time the ingredients should be allowed to infuse in the solvent, some solutions have been proposed. For example, published patent EP227200A1 describes a tea maker implementing a siphon mechanism allowing to drain the infuser after a certain period of time, without any user action. However, such a solution has some limitations, because if a higher input flow rate or a continuous input flow rate of the solvent in the infuser is used, for example to accelerate the brewing of ingredients, the infuser will easily overflow because the siphon mechanism cannot absorb such a high input flow rate of solvent, resulting in a non-optimal brewing process.

Another apparatus similar to the one of the invention is known from WO2010/041003A1.

### OBJECT AND SUMMARY OF THE INVENTION

It is an object of the invention to propose an improved apparatus for preparing a beverage from a solvent and ingredients. The invention is defined by the independent claims. The dependent claims define advantageous embodiments.

To this end, the apparatus according to the invention is characterized as defined in the characterizing portion of claim 1.

This apparatus not only allows the solvent to circulate from the infuser back to the container, but also regulates the output flow rate Rout of the solvent exiting the infuser and flowing back into the container. Thus, the solvent in the infuser leaves the infuser in a controllable way via the arrangement, ensuring that the solvent in the infuser will not overflow at the upper part of the infuser, even if the input flow rate of solvent into the infuser fluctuates. In other words, the arrangement AR allows the amount of solvent inside the infuser to remain constant in order to guarantee optimal brewing of the ingredients.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
Fig.1 depicts an apparatus according to the invention for preparing a beverage from a solvent and ingredients,
Figs.2A-2B depict a first type of implementation for an arrangement according to the invention,
Figs.3A-3B illustrate two positions of a cap element according to the invention,
Figs.3C-3D illustrate two positions of a cap element according to the invention,
Figs.4A-4B-4C-4D depict different views of the setup and operation of an arrangement according to the invention,
Figs.5A-5B depict two implementations of an improved cap element according to the invention,
Figs.6A-6B depict a second embodiment according to the invention,
Fig.7 depicts a second type of implementation for the arrangement AR according to the invention,
Fig.8 depicts an apparatus according to the invention for preparing a beverage from a solvent and ingredients.

### DETAILED DESCRIPTION OF THE INVENTION

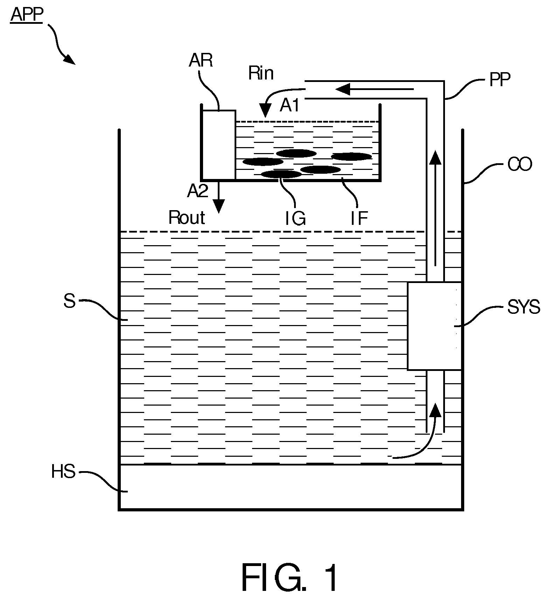

Fig.1 depicts an apparatus APP according to the invention for preparing a beverage from a solvent S and ingredients IG. The apparatus APP comprises:
- a container CO for containing the solvent,
- an infuser IF for containing the ingredients, and said infuser being placed in the container CO,
- a system SYS for carrying the solvent from the container CO into the infuser IF at a given input flow rate Rin,
- an arrangement AR for carrying the solvent from the infuser IF to the container CO, and for regulating the output flow rate Rout of said solvent to an average value corresponding to said given input inflow rate Rin.

The ingredients IG may correspond, for example, to any type of tea leaves, coffee, herbs, roots, fruits, or a mix of those ingredients.

The solvent may correspond, for example, to water, mineral water, tap water, salted water, alcohol, or a mix of those solvents.

Advantageously, the apparatus comprises a heating system HS placed at the bottom part of the container to heat the solvent.

If the apparatus according to the invention falls in the home-appliances category, the input flow rate Rin is typically in the range of 0 to 1.0L/min.
If the apparatus according to the invention falls in the semi-professional or professional category, the input flow rate Rin is typically in the range of 0 to 10.0L/min.

The infuser IF is placed in the container CO, and is for example fixed in the top part of container CO by legs or equivalent (not shown) extending from the container's wall to the infuser. The system SYS is used to circulate the solvent S from the lower part of container CO to the upper part of the infuser IF, via a pipe PP.

The system SYS corresponds, for example, to an electrical fluid pump.

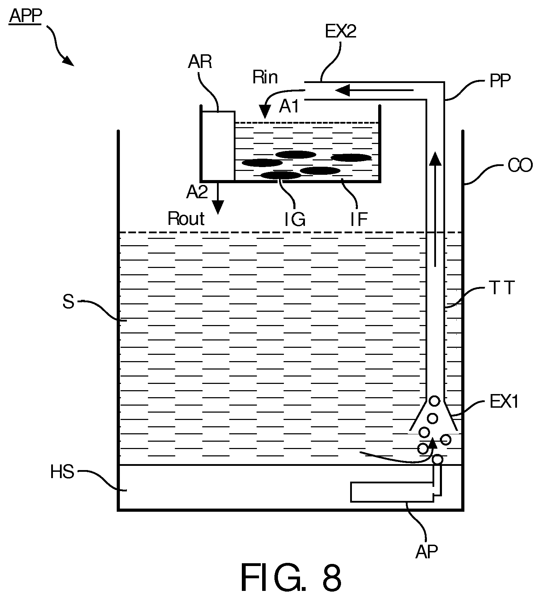

Alternatively, as depicted in Fig.8, the system SYS corresponds to a pumping mechanism based on percolation effect, and comprises:
- a tube TT placed in the container, the tube TT having a first extremity EX1 placed at the proximity of a bottom part BP of the container CO, and a second extremity EX2 reaching the infuser IF, and
- an air pump AP for generating an air flow exiting at said bottom part BP and entering the tube at the first extremity EX1, for carrying the solvent in the tube TT from the first extremity EX1 to the second extremity EX2.
The air flow is illustrated by white circles in the solvent S, under the first extremity EX1. The air pump AP may be of any type, but is preferably a diaphragm air pump. Air is pumped from outside the container. It is appreciated that the tube TT preferably extends vertically, so as to facilitate the movement of the air flow and the solvent therein. However, the tube TT may also be such that its main axis departs from the vertical direction, for example by an angle between 0 and 45 degrees. Also, the tube TT is preferably cylindrical-shaped, but may also have different shapes, such as a corkscrew-shape, or a curved-shape. The tube TT advantageously has an average diameter between 5 and 7 millimeters, or an average sectional area between 19.6 and 38.5 square millimeters. Advantageously, as illustrated, the first extremity EX1 of tube TT has a funnel-shaped entrance so that an air flow generated by the air pump AP more easily enters the tube TT. If the apparatus according to the invention falls within the home-appliances category, the air pump AP advantageously generates an air flow between 1 and 2 liters per minute, and the pumping is efficient if at least 80 % of this air flow enters the tube at the first extremity EX1. If the apparatus according to the invention falls within the semi-professional or professional category, the air pump AP advantageously generates an air flow between 10 and 20 liters per minute, and the pumping is efficient if at least 80 % of this air flow enters the tube at the first extremity EX1. By generating an air flow by means of the air pump instead of vapor bubbles naturally generated by locally boiling water, as is the case with a conventional percolator, the solvent can reach the upper part of the tube TT while having a temperature much below the boiling temperature of the solvent, so that the temperature of the solvent can be adapted to the ingredients used in the brewing process. Preferably, if a heating system HS is installed in the bottom part of the container, the heating power of the heating element is such that the solvent is heated to a temperature in excess of 60 degrees Centigrade, so as to improve the pumping effect in the tube TT.

Alternatively, the system SYS corresponds to a pumping mechanism driven by steam (not shown) generated after heating the solvent in the container.

The solvent leaving the pipe PP, as illustrated by arrows A1, drops into infuser IF at a given input flow rate Rin. The solvent in the infuser IF then drops back into container CO via the arrangement AR at an output flow rate Rout, as illustrated by arrows A2. Circulating the solvent from the container CO into the pipe PP, then infusing the ingredients in the infuser IF in the solvent contained in the infuser, and subsequently the solvent in the infuser dropping back into the container, constitute a closed brewing cycle that is continued until the brewing process is stopped. The brewing process is stopped based on a preset duration or an end-user time preference, but as this aspect is not part of the present invention, it will not be further detailed here.

The arrangement AR not only allows the solvent to circulate from the infuser back to the container, but also regulates the output flow rate Rout of the solvent exiting the infuser and flowing back to the container, as will be further detailed in the following. Thus, the solvent in the infuser leaves the infuser in a controllable way via the arrangement AR, ensuring that the solvent in the infuser will not overflow at the upper part of the infuser, even if the input flow rate Rin of solvent in the infuser fluctuates. In other words, the arrangement AR allows the amount of solvent inside the infuser to remain constant to guarantee optimal brewing of the ingredients.

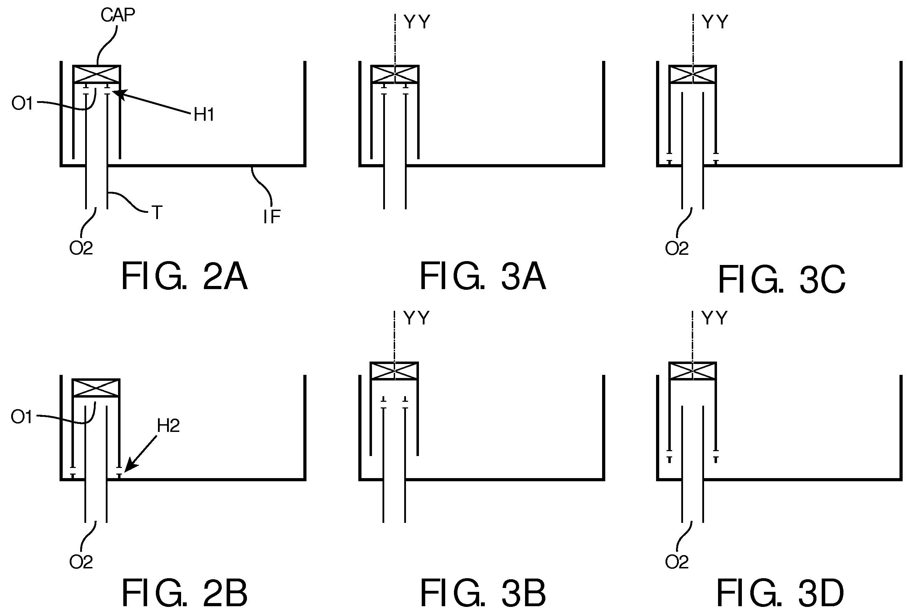

Figs.2A-2B depict a first type of implementation of the arrangement AR according to the invention. The arrangement AR comprises a tube T extending through the bottom part of the infuser IF. The tube T has a first opening O1 inside the infuser IF and a second opening 02 outside the infuser emerging in the container CO. The arrangement AR also comprises a cap element CAP cooperating with the tube T to obstruct the first opening O1, depending on the height of the solvent S in the infuser IF.

Advantageously, the tube T has a circular section, and the cap element is cylindrically shaped. Advantageously, the cap element is made of food-grade material, preferably heat-resistant.

According to a first embodiment of the first type of implementation of the arrangement AR, the cap element comprises a float F attached to its top, to allow the cap element CAP to obstruct the first opening O1 depending on the height of the solvent in the infuser IF. Alternatively, the float F can be attached to a side or other parts of the cap element (not shown).

The float is made of any material having a density lower than that of the solvent. Alternatively, the float can comprise an empty cavity (vacuumed, or filled with air or other gasses).

The cap element CAP is adapted to allow the solvent in the infuser to freely enter the inside cavity of the cap element, independently of the position of the cap element. To this end two implementations are proposed:
- According to a first implementation illustrated in Fig.2A, the top part of the cap element leans on the first opening O1, and the length of the inside cavity of the cap element is shorter than the length of the tube between the first opening O1 and the bottom part of the infuser. In this case, as will be better understood in the following, the tube T also comprises at least one opening at its top part near the first opening O1, such as holes H1 formed in the walls of the tube. The opening at the top part of the tube T near the first opening O1 is such that the output flow rate Rout = Rout_min through this opening should be smaller than the input flow rate Rin. This condition can for example be fulfilled by determining the diameter of holes H1 for the range of input flow rates Rin considered, for example via a preliminary calibration.
- According to a second implementation illustrated in Fig.2B, the bottom part of the cap element leans on the bottom part of the infuser, and comprises at least one opening at its bottom part, such as holes H2 formed in the walls of the cap element. In this case, as will be better understood in the following, the length of the inside cavity of the cap element is slightly longer than the length of the tube between the bottom part of the infuser and the first opening O1, to ensure a minimum gap between the top part of the cap element and the first opening O1. The minimum gap between the top part of the cap element and the first opening O1 is such that the output flow rate Rout = Rout_min through this minimum gap should be smaller than the input flow rate Rin. This condition can for example be fulfilled by determining a suitable distance between the top part of the cap element and the first opening O1 for the range of input flow rates Rin considered, for example via a preliminary calibration.

Figs.3A-3B illustrate two positions of the cap element according to the invention. The cap element corresponds to the cap element as depicted in Fig.2A. The cap element CAP freely cooperates with the tube T via translation along a vertical direction YY. When the cap element CAP is in the position as illustrated in Fig.3A, the top part of the cap element obstructs the first opening O1, defining a minimum gap between the top part of the cap element and the first opening O1. When the cap element CAP is in the position as illustrated in Fig.3B, the top part of the cap element uncovers the first opening O1, defining a larger gap between the top part of the cap element and the first opening O1.

Figs.3C-3D illustrate two positions of the cap element according to the invention. The cap element corresponds to the cap element as depicted in Fig.2B. The cap element CAP freely cooperates with the tube T via translation along a vertical direction YY. When the cap element CAP is in the position as illustrated in Fig.3C, the top part of the cap element obstructs the first opening O1, defining a minimum gap between the top part of the cap element and the first opening O1. When the cap element CAP is in the position as illustrated in Fig.3D, the top part of the cap element uncovers the first opening O1, defining a larger gap between the top part of the cap element and the first opening O1.

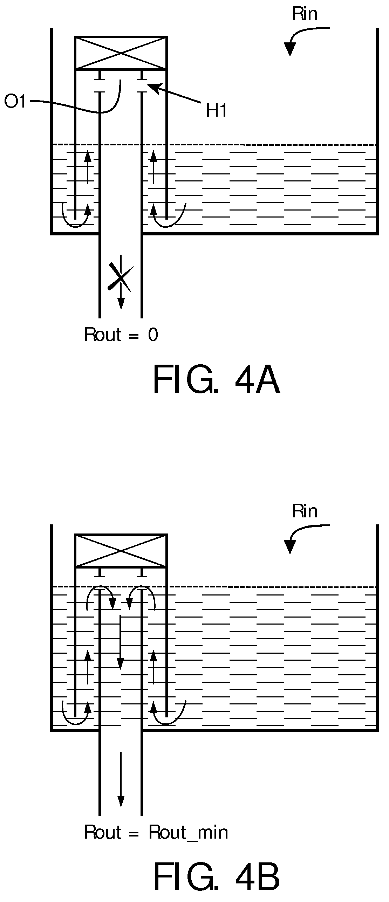

Figs.4A-4B-4C-4D depict different views of the setup and operation of the arrangement AR according to the invention, which will be explained based on an arrangement AR according to Fig.2A, but which could similarly be explained based on an arrangement AR according to Fig.2B.
In Fig.4A, which corresponds to the start of the brewing process, the solvent is introduced into the infuser at a given input flow rate Rin. Solvent enters the inside cavity of the cap element via the bottom part thereof, and then rises inside the cavity.
In Fig.4B, as soon as the solvent level reaches the first opening O1, the solvent starts to exit via the holes H1 at an output flow rate Rout = Rout_min through the second opening 02.

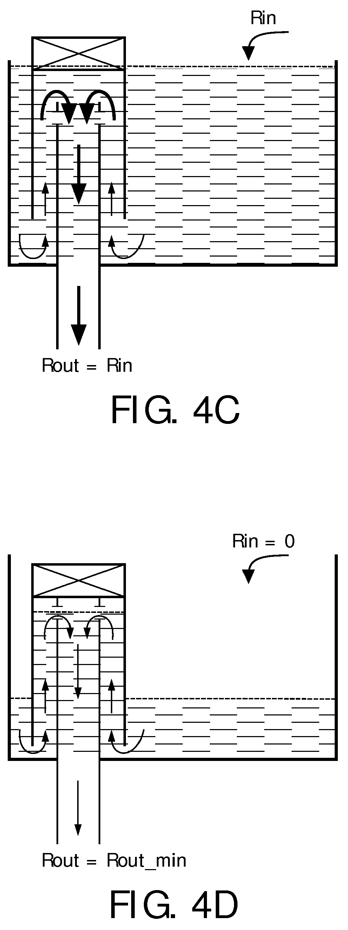

In Fig.4C, since Rout_min < Rin, the solvent continues to rise in the infuser up to the bottom part of the float F. As the solvent continues to rise inside the infuser, the float F facilitates the upward movement of the cap element. The higher the vertical position of the cap element, the larger the gap between the top part of the cap element and the first opening O1 is. As the gap between the top part of the cap element and the first opening O1 increases, solvent can exit at a higher flow rate via the tube T to the second opening 02. The cap element thus moves upwards until it reaches an equilibrium for which the gap between the top part of the cap element and the first opening O1 is large enough to evacuate, via the second opening 02, all the additional quantity of solvent introduced into the infuser at an input flow rate Rin. When this equilibrium is reached, the average value of the output flow rate Rout is thus equal to the input flow rate Rin. This equilibrium condition is continued as long as the brewing of ingredients is not terminated.
In Fig.4D, which corresponds to the end of the brewing process, the input flow rate Rin is set to 0. As a result, the level of the solvent in the infuser starts to decrease, while the output flow rate varies from Rout = Rin to Rout = Rout_min as soon as the cap element has reached its initial position as shown in Fig.4A. Then, since the cap element and the exit tube T form a siphon assembly, the remaining solvent in the infuser is totally drained from the infuser to the container at an output flow rate Rout = Rout_min.

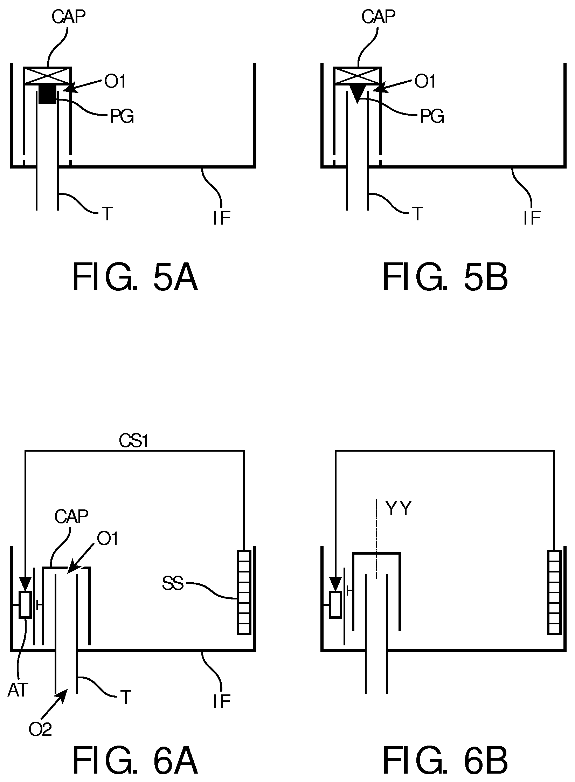

Figs.5A-5B depict two implementations of an improved cap element CAP according to the invention. The cap element additionally comprises a plug PG cooperating with the first opening O1. The plug facilitates partial obstruction of the first opening O1 when the cap element is in a position in which the level of solvent in the infuser is low enough. The plug can be cylindrically shaped, as illustrated in Fig.5A. Alternatively, the plug can be conically shaped, as illustrated in Fig.8B. A conically shaped plug is advantageous for the reason that it results in a smoother change in the opening of the first opening O1 when the cap element moves upwards as the solvent in the infuser is rising, which allows a smoother regulation of the output flow rate Rout.

According to a second embodiment of the arrangement AR according to the invention, as illustrated in Figs.6A-6B, the arrangement AR further comprises an actuator AT for moving the cap element CAP along said tube T, based on a control signal CS1 reflecting the level of solvent in the infuser. According to this embodiment, the cap does not comprise a float anymore, and the upward movement of the cap element takes place via the actuator AT instead. To this end, the apparatus according to the invention comprises a sensor SS placed in the infuser, to generate a control signal CS1 indicating the level of solvent in the infuser. This control signal CS1 is used by the actuator AT to move the cap element upwards or downwards to enlarge the gap to a greater or smaller extent between the top part of the cap element CAP and the first opening O1, with a view to maintaining a given level of solvent in the infuser. Fig.6A illustrates the situation where the actuator maintains a minimum gap between the top part of the cap element CAP and the first opening O1, and Fig.6B illustrates the situation where the actuator maintains a larger gap between the top part of the cap element CAP and the first opening O1. The actuator corresponds for example to a linear motor, or any other actuator adapted to cause the cap element CAP to perform a translatory motion along vertical axis YY. The sensor SS corresponds for example to a resistor-based sensor delivering a voltage signal proportional to the level of solvent in the infuser.

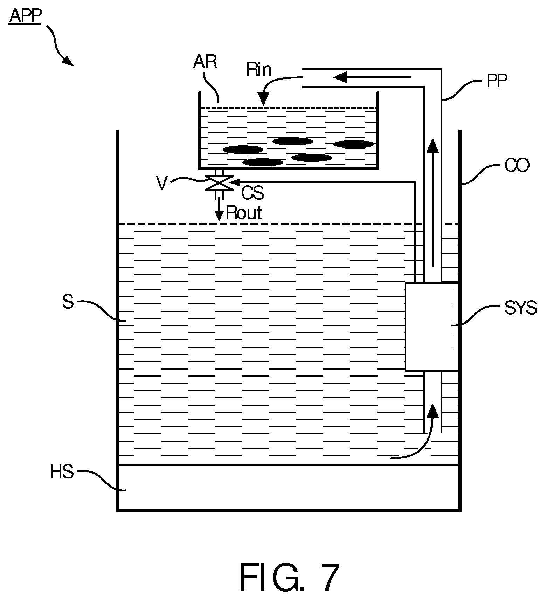

Fig.7 depicts a second type of implementation of the arrangement AR.

The arrangement AR comprises a valve V extending through the bottom part of the infuser IF. The valve has a section varying as a function of a control signal CS2 reflecting the value of the input flow rate Rin. The valve is electrically controlled by the control signal CS2. The larger the section of the valve, the higher the output flow rate Rout. Through preliminary calibration, for each given value of the input flow rate Rin, it is possible to determine the corresponding section of the valve necessary to ensure an output flow rate equal to the input flow rate Rin. Thus, after brewing has started and the solvent has reached a predetermined level in the infuser, the valve is opened in a dynamic way to match the given input flow rate Rin, ensuring that the solvent in the infuser will not overflow. Alternatively, the valve has a section varying as a function of a control signal CS2 reflecting the level of solvent in the infuser. To this end, a sensor such as sensor SS described in Fig.6A-6B can be used.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage. Any reference sign in the claims should not be construed as limiting the scope.

## Claims

1. Apparatus (APP) for preparing a beverage from a solvent (S) and ingredients (IG), said apparatus comprising:
- a container (CO) for containing said solvent,
- an infuser (IF) for containing said ingredients, and said infuser being placed in said container (CO),
- a system (SYS) for carrying said solvent from said container (CO) into said infuser (IF) at a given input flow rate (Rin),
- an arrangement (AR) for carrying the solvent from said infuser (IF) into said container (CO), and for regulating the output flow rate (Rout) of said solvent to an average value corresponding to said given input flow rate (Rin), wherein arrangement (AR) comprises:
- a tube (T) extending through the bottom part of the infuser (IF), said tube (T) having a first opening (O1) inside the infuser (IF) and a second opening (O2) outside the infuser emerging in said container (CO),
- a cap element (CAP) cooperating with said tube (T) to obstruct said first opening (O1), depending on the height of solvent in the infuser (IF).

2. Apparatus as claimed in claim 1, wherein said cap element (CAP) comprises a float (F).

3. Apparatus as claimed in claim 2, wherein said cap element (CAP) further comprises a plug (PG) cooperating with said first opening (O1).

4. Apparatus as claimed in claim 3, wherein said plug (PG) is cylindrically shaped.

5. Apparatus as claimed in claim 3, wherein said plug (PG) is conically shaped.

6. Apparatus as claimed in claim 1, wherein said arrangement (AR) further comprises an actuator (AT) for moving the cap element (CAP) along said tube (T), based on a control signal (CS1) reflecting the level of solvent in the infuser.

7. Apparatus as claimed in claim 1, wherein said arrangement (AR) comprises a valve (V) extending through the bottom part of the infuser (IF), said valve having a section varying as a function of a control signal (CS2) reflecting the value of the input flow rate (Rin).

8. Apparatus as claimed in any one of claims 1 to 7, wherein said system (SYS) is a fluid pump.

9. Apparatus as claimed in any one of claims 1 to 7, wherein said system (SYS) is a pumping mechanism based on percolation effect.

## Patentansprüche

1. Vorrichtung (APP) zum Zubereiten eines Getränks aus einem Lösungsmittel (S) und Zutaten (IG), wobei die besagte Vorrichtung folgendes umfasst:
- einen Behälter (CO) zum Beinhalten des besagten Lösungsmittels,
- einen Infuser (IF) zum Beinhalten der besagten Zutaten, und wobei der besagte Infuser in den besagten Behälter (CO) platziert wird,
- ein System (SYS) zum Befördern des besagten Lösungsmittels mit einem gegebenen Einlauf-Durchsatz (Rin) vom besagten Behälter (CO) in den besagten Infuser (IF),
- eine Anordnung (AR) zum Befördern des Lösungsmittels vom besagten Infuser (IF) in den besagten Behälter (CO), und zum Regeln des AuslaufDurchsatzes (Rout) des besagten Lösungsmittels auf einen Mittelwert, der dem gegebenen Einlauf-Durchsatz (Rin) entspricht, wobei die Anordnung (AR) folgendes umfasst:
- ein Rohr (T), das sich durch den Bodenabschnitt des Infusers (IF) erstreckt, wobei das besagte Rohr (T) eine erste Öffnung (O1) innerhalb des Infusers (IF) und eine zweite Öffnung (O2) außerhalb des Infusers aufweist, die in den besagten Behälter (CO) ragt,
- ein Verschlusselement (CAP), das mit dem besagten Rohr (T) zusammenwirkt, um die besagte erste Öffnung (O1) in Abhängigkeit von der Höhe des Lösungsmittels im Infuser (IF) zu versperren.

2. Vorrichtung nach Anspruch 1, wobei das besagte Verschlusselement (CAP) einen Schwimmer (F) umfasst.

3. Vorrichtung nach Anspruch 2, wobei das besagte Verschlusselement (CAP) darüber hinaus einen Stopfen (PG) umfasst, der mit der besagten ersten Öffnung (O1) zusammenwirkt.

4. Vorrichtung nach Anspruch 3, wobei der besagte Stopfen (PG) zylindrisch geformt ist.

5. Vorrichtung nach Anspruch 3, wobei der besagte Stopfen (PG) kegelig geformt ist.

6. Vorrichtung nach Anspruch 1, wobei die besagte Anordnung (AR) darüber hinaus einen Steller (AT) zum Bewegen des Verschlusselements (CAP) entlang des besagten Rohres (T) umfasst, basierend auf einem Steuersignal (CS1), welches das Niveau des Lösungsmittels im Infuser reflektiert.

7. Vorrichtung nach Anspruch 1, wobei die Anordnung (AR) ein Ventil (V) umfasst, das sich durch den Bodenabschnitt des Infusers (IF) erstreckt, wobei das besagte Ventil einen Querschnitt aufweist, der in Abhängigkeit von einem Steuersignal (CS2) variiert, das den Wert des Einlauf-Durchsatzes (Rin) reflektiert.

8. Vorrichtung nach irgendeinem der Ansprüche 1 bis 7, wobei das besagte System (SYS) eine Flüssigkeitspumpe ist.

9. Vorrichtung nach irgendeinem der Ansprüche 1 bis 7, wobei das besagte System (SYS) ein Pumpmechanismus basierend auf Perkolationswirkung ist.

## Revendications

1. Appareil (APP) pour préparer une boisson à partir d'un solvant (S) et d'ingrédients (IG), ledit appareil comprenant :
- un récipient (CO) pour contenir ledit solvant,
- un dispositif d'infusion (IF) pour contenir lesdits ingrédients, et ledit dispositif d'infusion étant placé dans ledit récipient (CO),
- un système (SYS) pour transporter ledit solvant dudit récipient (CO) jusque dans ledit dispositif d'infusion (IF) à un débit d'entrée (Rin) donné,
- un agencement (AR) pour transporter le solvant dudit dispositif d'infusion (IF) jusque dans ledit récipient (CO), et pour réguler le débit de sortie (Rout) dudit solvant à une valeur moyenne correspondant audit débit d'entrée (Rin) donné, dans lequel ledit agencement (AR) comprend :
- un tube (T) s'étendant à travers la partie inférieure du dispositif d'infusion (IF), ledit tube (T) ayant une première ouverture (O1) à l'intérieur du dispositif d'infusion (IF) et une seconde ouverture (02) à l'extérieur du dispositif d'infusion émergeant dans ledit récipient (CO),
- un élément couvercle (CAP) coopérant avec ledit tube (T) pour obstruer ladite première ouverture (O1), en fonction de la hauteur de solvant dans le dispositif d'infusion (IF).

2. Appareil selon la revendication 1, dans lequel ledit élément couvercle (CAP) comprend un flotteur (F).

3. Appareil selon la revendication 2, dans lequel ledit élément couvercle (CAP) comprend en outre un bouchon (PG) coopérant avec ladite première ouverture (O1).

4. Appareil selon la revendication 3, dans lequel ledit bouchon (PG) est de forme cylindrique.

5. Appareil selon la revendication 3, dans lequel ledit bouchon (PG) est de forme conique.

6. Appareil selon la revendication 1, dans lequel ledit agencement (AR) comprend en outre un actionneur (AT) pour déplacer l'élément couvercle (CAP) le long dudit tube (T), sur la base d'un signal de commande (CS1) reflétant le niveau de solvant dans le dispositif d'infusion.

7. Appareil selon la revendication 1, dans lequel ledit agencement (AR) comprend une valve (V) s'étendant à travers la partie inférieure du dispositif d'infusion (IF), ladite valve ayant une section variant en fonction d'un signal de commande (CS2) reflétant la valeur du débit d'entrée (Rin).

8. Appareil selon l'une quelconque des revendications 1 à 7, dans lequel ledit système (SYS) est une pompe à fluide.

9. Appareil selon l'une quelconque des revendications 1 à 7, dans lequel ledit système (SYS) est un mécanisme de pompage basé sur un effet de percolation.
